# EUROPEAN PATENT SPECIFICATION

(11) **EP 4 525 147 B1**
(45) Date of publication and mention of the grant of the patent: **07.10.2026**
(21) Application number: 24199847.5
(22) Date of filing: 11.09.2024
(51) Int. Cl.: H01M 50/105, H01M 50/186, H01M 50/55, H01M 50/121, H01M 50/124, H01M 50/193

(54) **SECONDARY BATTERY AND ELECTRONIC APPARATUS**
SEKUNDÄRBATTERIE UND ELEKTRONISCHE VORRICHTUNG
BATTERIE SECONDAIRE ET APPAREIL ÉLECTRONIQUE

(30) Priority: 12.09.2023 CN 202311174698
(43) Date of publication of application: 19.03.2025
(73) Proprietor: Ningde Amperex Technology Ltd., Ningde City, Fujian 352100 (CN)
(72) Inventor: WANG, Jianming, 352100 Ningde City, Fujian Province (CN)
(74) Representative: Icosa

(56) References cited:
- EP-A1- 3 869 581
- WO-A1-2015/141772
- WO-A1-2016/137141
- WO-A1-2023/106345

## Description

### TECHNICAL FIELD

This application relates to the field of pouch battery technologies, and in particular, to a secondary battery and an electronic apparatus.

### BACKGROUND

Secondary batteries are widely used in electric vehicles and consumer electronic products due to their advantages such as high energy density, high output power, and long cycle life. However, secondary batteries are likely to pose safety issues such as fire in the case of abnormal situations such as dropping or collision. EP 3 869 581 A1 discloses a prior art secondary battery comprising an electrode assembly in a packaging bag.

### SUMMARY

An objective of this application is to propose a secondary battery, which can reduce the risk of internal short circuits.

A first aspect of this application provides a secondary battery according to claim 1, including an electrode assembly, a packaging bag, and a fixing member. The packaging bag includes a first packaging portion and a second packaging portion disposed opposite to each other in a first direction. The first packaging portion includes a first region and a second region connected to each other. The second packaging portion includes a third region and a fourth region connected to each other. The second region and the fourth region are arranged in the first direction form a body portion for accommodating the electrode assembly, and the first region and the third region are arranged in the first direction form a sealing portion for sealing the body portion. The fixing member includes a fixing portion and a connecting portion connected to each other. The fixing portion surrounds the electrode assembly. The connecting portion is disposed between the first region and the third region, and viewed along the first direction, the connecting portion overlaps with the sealing portion.

In the secondary battery provided in this application, the fixing portion surrounds the electrode assembly to fasten the electrode assembly, reducing the risk of short circuits due to contact between adjacent positive electrode plate and negative electrode plate caused by shrinkage of a separator. In addition, the connecting portion is disposed between the first region and the third region, such that the fixing member is connected to the packaging bag via the connecting portion, which improves stability between the electrode assembly and the packaging bag and reduces the risk of sliding of the electrode assembly in the packaging bag.

According to some embodiments of this application, the connecting portion includes a first sealing layer, where the first sealing layer includes a first surface and a second surface disposed opposite to each other in the first direction.

According to some embodiments of this application, the connecting portion is connected to the first region via the first surface and connected to the third region via the second surface. The first sealing layer being connected to the first region and the third region can reduce manufacturing costs.

According to some embodiments of this application, the connecting portion is connected to the first region and the third region via the first surface.

According to some embodiments of this application, the connecting portion further includes a metal layer and a second sealing layer, where in the first direction, the first sealing layer, the metal layer, and the second sealing layer are stacked sequentially, and the connecting portion is connected to the first region via the first sealing layer and connected to the third region via the second sealing layer.

According to some embodiments of this application, the connecting portion further includes a metal layer and a second sealing layer, where in the first direction, the first sealing layer, the metal layer, and the second sealing layer are stacked sequentially, and the connecting portion is connected to the first region and the third region via the first sealing layer.

According to some embodiments of this application, the connecting portion and the fixing portion are integrally disposed or separately disposed.

According to some embodiments of this application, the first sealing layer and/or the second sealing layer includes at least one of polypropylene, modified polypropylene, polyethylene, ethylene-propylene copolymer, ethylene-vinyl acetate copolymer, or ethylene-ethyl acrylate copolymer.

According to some embodiments of this application, the secondary battery further includes a first adhesive layer, where the first adhesive layer is disposed on a surface of the fixing portion facing the packaging bag and is adhered to the body portion. This is conducive to reducing the risk of sliding of the electrode assembly in the packaging bag.

According to some embodiments of this application, in a second direction perpendicular to the first direction, the electrode assembly includes a first edge and a second edge located on a side opposite the first edge, and the first adhesive layer includes a third edge located on a side of the first edge and a fourth edge located on a side opposite the third edge and on a side of the second edge, where a distance by which the first edge extends beyond the third edge is greater than or equal to 2 mm. This reduces the risk of the first adhesive layer overflowing to the sealing portion under the conditions of formation heating and pressurization, improving sealing reliability.

According to some embodiments of this application, the first adhesive layer includes at least one of polyethylene, polypropylene, phenolic resin, melamine resin, unsaturated polyester resin, epoxy resin, silicone resin, or polyurethane.

According to some embodiments of this application, in a second direction, the first adhesive layer extends to the connecting portion; and viewed along the first direction, the first adhesive layer does not overlap with the sealing portion. This reduces the risk of the first adhesive layer being sealed into the sealing portion, improving the sealing reliability in the second direction.

According to some embodiments of this application, in the second direction, the first adhesive layer includes a third edge and a fourth edge located on a side opposite the third edge, and the connecting portion includes a fifth edge located on a side of the third edge and a sixth edge located on a side opposite the fifth edge and on a side of the fourth edge, where a distance between the third edge and the fifth edge is 2 mm to 10 mm. This is conducive to improving the sealing reliability.

According to some embodiments of this application, the secondary battery further includes a second adhesive layer, where the second adhesive layer is disposed on a surface of the fixing portion facing the electrode assembly and is adhered to the electrode assembly.

According to some embodiments of this application, the secondary battery further includes a first metal plate, a second metal plate, a first insulating layer, and a second insulating layer. The first metal plate is electrically connected to the electrode assembly and extends out of the packaging bag in a second direction through the sealing portion. The second metal plate is electrically connected to the electrode assembly and extends out of the packaging bag in the second direction through the sealing portion. The first insulating layer covers a surface of the first metal plate. The second insulating layer covers a surface of the second metal plate.

According to some embodiments of this application, viewed along the first direction, the first metal plate, the second metal plate, and the connecting portion are located on a same side of the secondary battery.

According to some embodiments of this application, in a third direction, a distance between the first metal plate and the second metal plate is less than 1.5 mm, the first direction, the second direction, and the third direction being perpendicular to each other; and viewed along the first direction, the connecting portion overlaps with the first insulating layer and the second insulating layer, and the connecting portion includes a first face facing the first region and a second face facing the third region, where the first face is adhered to the first insulating layer, and the second face is adhered to the second insulating layer. The first metal plate and the second metal plate are isolated by the first insulating layer, the connecting portion, and the second insulating layer adhered, reducing the risk of short circuits due to contact between the first metal plate and the second metal plate.

According to some embodiments of this application, viewed along the first direction, in a third direction, the connecting portion is located between the first metal plate and the second metal plate and does not overlap with the first insulating layer and the second insulating layer, the first direction, the second direction, and the third direction being perpendicular to each other.

According to some embodiments of this application, in the second direction, the connecting portion includes a fifth edge and a sixth edge located on a side opposite the fifth edge, and the sealing portion includes a seventh edge located on a side of the fifth edge and an eighth edge located on a side opposite the seventh edge and on a side of the sixth edge, where a distance by which the fifth edge extends beyond the seventh edge is L1. This is conducive to improving the sealing reliability.

According to some embodiments of this application, in the second direction, the sealing portion includes a seventh edge and an eighth edge located on a side opposite the seventh edge, and the first insulating layer includes a ninth edge located on a side of the seventh edge and a tenth edge located on a side opposite the ninth edge and on a side of the eighth edge, where a distance by which the ninth edge extends beyond the seventh edge is L2, and 0.05 mm ≤ L2 ≤ 2 mm.

According to some embodiments of this application, in a third direction perpendicular to the first direction, width of the fixing portion is 3 mm to 50 mm. This is conducive to improving the fastening effect of the fixing member on the electrode assembly.

According to some embodiments of this application, in the first direction, an area of an orthographic projection of the fixing portion on the electrode assembly is S1, and an area of an orthographic projection of the electrode assembly is S2, satisfying 15% ≤ S1/S2 ≤ 80%.

According to some embodiments of this application, the fixing member is provided in plurality, and viewed along the first direction, the plurality of fixing members intersect.

A second aspect of this application provides an electronic apparatus including the secondary battery according to any one of the foregoing embodiments.

### BRIEF DESCRIPTION OF DRAWINGS

FIG. 1 is a view of a secondary battery according to an embodiment of this application viewed along a first direction.
FIG. 2 is a schematic diagram of a packaging bag before sealing according to an embodiment of this application.
FIG. 3 is a cross-sectional view of the secondary battery in FIG. 1 along III-III.
FIG. 4 is a cross-sectional view of the secondary battery in FIG. 1 along IV-IV.
FIG. 5 is a schematic cross-sectional view of a secondary battery according to another embodiment of this application.
FIG. 6 is a schematic cross-sectional view of a secondary battery according to still another embodiment of this application.
FIG. 7 is a schematic cross-sectional view of a secondary battery according to still another embodiment of this application.
FIG. 8 is a schematic cross-sectional view of a secondary battery according to still another embodiment of this application.
FIG. 9 is a schematic cross-sectional view of a secondary battery according to still another embodiment of this application.
FIG. 10 is a schematic cross-sectional view of a secondary battery according to still another embodiment of this application.
FIG. 11 is a view of a secondary battery according to still another embodiment of this application viewed along a first direction.

**Reference signs of main components:**

| | |
|---|---|
| secondary battery | 100 |
| electrode assembly | 10 |
| packaging bag | 20 |
| first metal plate | 30 |
| second metal plate | 40 |
| first packaging portion | 20a |
| second packaging portion | 20b |
| first region | 20a1 |
| second region | 20a2 |
| third region | 20b1 |
| fourth region | 20b2 |
| recess | S1 |
| body portion | 21 |
| sealing portion | 22 |
| sealing layer | 201 |
| metal layer | 202 |
| protective layer | 203 |
| first electrode plate | 11 |
| second electrode plate | 12 |
| separator | 13 |
| fixing member | 50 |
| fixing portion | 51 |
| connecting portion | 52 |
| first sealing layer | 521 |
| first surface | 521a |
| second surface | 521b |
| metal layer | 522 |
| second sealing layer | 523 |
| first adhesive layer | 61 |
| second adhesive layer | 62 |
| first edge | 10a |
| second edge | 10b |
| third edge | 61a |
| fourth edge | 61b |
| fifth edge | 52a |
| sixth edge | 52b |
| seventh edge | 22a |
| eighth edge | 22b |
| ninth edge | 70a |
| tenth edge | 70b |
| first insulating layer | 70 |
| second insulating layer | 80 |
| first face | 52d |
| second face | 52c |
| first direction | Z |
| second direction | Y |
| third direction | X |

This application will be further described with reference to the accompanying drawings in the following specific embodiments.

### DETAILED DESCRIPTION

The following clearly and in detail describes the technical solutions in some embodiments of this application. Apparently, the described embodiments are some rather than all of the embodiments of this application. Unless otherwise defined, all technical and scientific terms used herein shall have the same meanings as commonly understood by persons skilled in the art to which this application belongs. The terms used in the specification of this application are for description of specific embodiments only without any intention to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be enlarged for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the descriptions of some embodiments of this application means "one or more embodiments of this application".

The terminology used herein is merely intended to describe specific embodiments but not intended to constitute any limitation on this application. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

In this application, the element A being adhered to the element B means that the element A and the element B are heated to soften and melt for adhering.

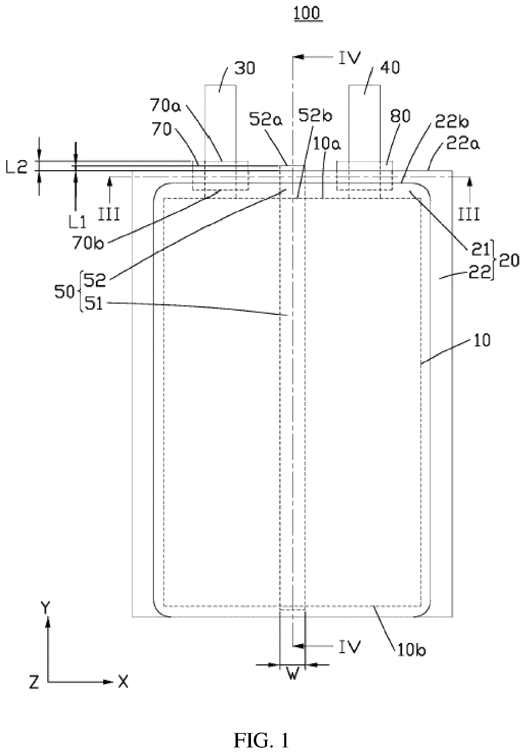

FIG. 1 is a view of a secondary battery according to an embodiment of this application viewed along a first direction. Referring to FIG. 1, a secondary battery 100 includes an electrode assembly 10, a packaging bag 20, a first metal plate 30, and a second metal plate 40. The electrode assembly 10 is accommodated in the packaging bag 20. The first metal plate 30 and the second metal plate 40 are both electrically connected to the electrode assembly 10, and extend out of the packaging bag 20 along a second direction Y to connect to an external element. In this embodiment, the first metal plate 30 and the second metal plate 40 are located on a same side of the secondary battery 100 in the second direction Y. In other embodiments, the first metal plate 30 and the second metal plate 40 may be located on different sides of the secondary battery 100.

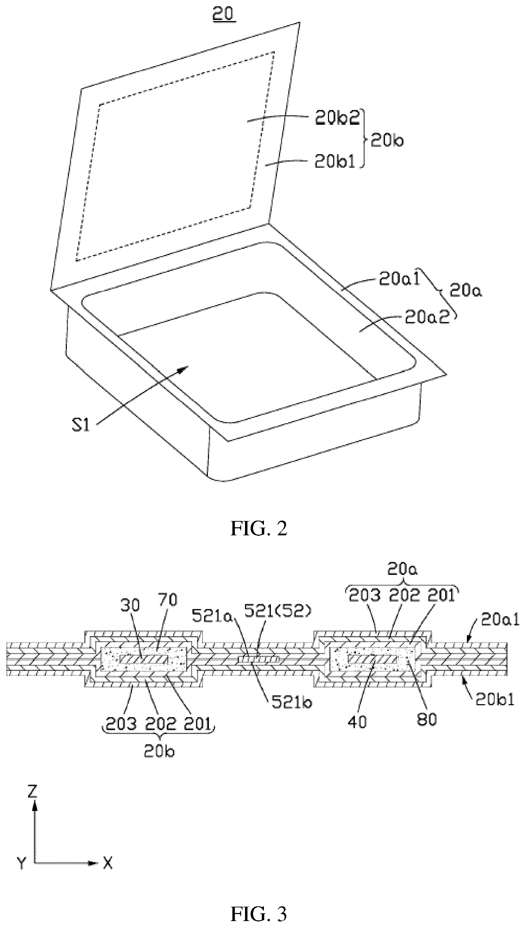

FIG. 2 is a schematic diagram of a packaging bag before sealing. Referring to FIG. 2, the packaging bag 20 includes a first packaging portion 20a and a second packaging portion 20b disposed opposite to each other in a first direction Z perpendicular to the second direction Y, and the first packaging portion 20a and the second packaging portion 20b are integrally disposed and sealed to form the packaging bag 20. The first packaging portion 20a includes a first region 20a1 and a second region 20a2 connected to each other, where three side edges of the second region 20a2 are surrounded by the first region 20a1. The second packaging portion 20b includes a third region 20b1 and a fourth region 20b2 connected to each other, where three side edges of the fourth region 20b2 are surrounded by the third region 20b1. The second region 20a2 and the fourth region 20b2 are arranged in the first direction Z. The fourth region 20b2 is substantially in a flat plate shape, the second region 20a2 is provided with a recess S1 for accommodating the electrode assembly 10, and the second region 20a2 and the fourth region 20b2 form a body portion 21 (referring to FIG. 1) for accommodating the electrode assembly 10. The first region 20a1 and the third region 20b1 are arranged in the first direction Z and are connected to form a sealing portion 22 (referring to FIG. 1) for sealing the body portion 21. The first metal plate 30 and the second metal plate 40 extend out of the packaging bag 20 through the sealing portion 22.

FIG. 3 is a cross-sectional view along III-III in FIG. 1. Referring to FIG. 3 together, the packaging bag 20 has a film stacking structure. Specifically, the first packaging portion 20a and the second packaging portion 20b both include a sealing layer 201, a metal layer 202, and a protective layer 203 stacked, where the sealing layer 201 is disposed close to the electrode assembly 10, and the protective layer 203 is disposed away from the electrode assembly 10 and exposed outside the secondary battery 100. The protective layer 203 may be made of polymer resin, which is used to protect the metal layer 202. The metal layer 202 may be made of aluminum, steel, or the like, which is used to prevent penetration of moisture from an external environment and enhance strength of the packaging bag 20. The sealing layer 201 may be made of a polymer, such as polypropylene or polyamide. The sealing layers 201 located in the first region 20a1 and the third region 20b1 may be directly connected through heat fusion to form the sealing portion 22. In other embodiments, another fusible element is provided between the sealing layers 201 located in the first region 20a1 and the third region 20b1, allowing the sealing layers 201 located in the first region 20a1 and the third region 20b1 to be indirectly connected through heat fusion to form the sealing portion 22. In another embodiment, the sealing layers 201 located in the first region 20a1 and the third region 20b1 are connected through adhesion to form the sealing portion 22, for example, an adhesive layer is disposed between the sealing layers 201 located in the first region 20a1 and the third region 20b1 and the sealing layers 201 are adhered together through the adhesive layer. In this embodiment, the packaging bag 20 is an aluminum-plastic film or a steel-plastic film.

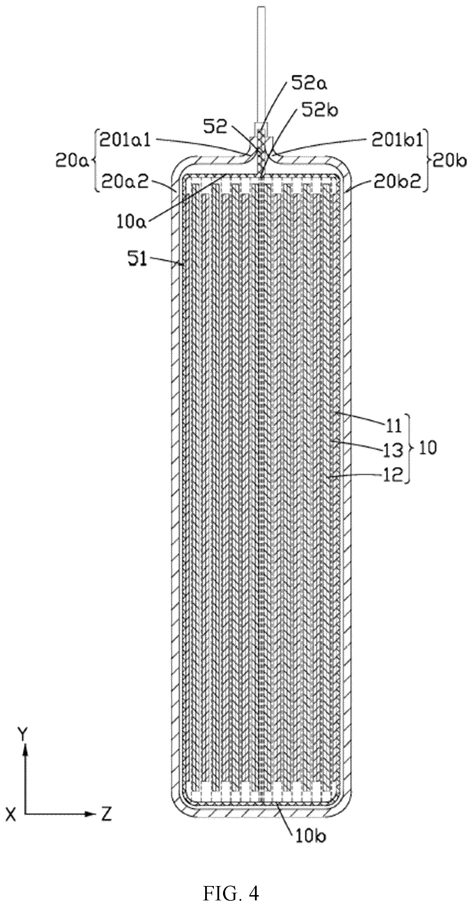

FIG. 4 is a cross-sectional view along IV-IV in FIG. 1. Referring to FIG. 4, the electrode assembly 10 includes a first electrode plate 11, a second electrode plate 12, and a separator 13 disposed between the first electrode plate 11 and the second electrode plate 12. The first electrode plate 11, the separator 13, and the second electrode plate 12 are alternately stacked in the first direction Z to form a laminated structure. In other embodiments, the first electrode plate 11, the separator 13, and the second electrode plate 12 are stacked and then wound to form a wound structure.

The first electrode plate 11 includes a first current collector and a first active substance layer disposed on at least one surface of the first current collector. The second electrode plate 12 includes a second current collector and a second active substance layer disposed on at least one surface of the second current collector. In this embodiment, the first electrode plate 11 is a positive electrode plate, and the second electrode plate 12 is a negative electrode plate. The first current collector and the second current collector both include at least one of Ni, Ti, Cu, Ag, Au, Pt, Fe, or Al. The first active substance layer includes a positive electrode active substance, and the positive electrode active substance may include at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadyl phosphate, lithium-rich manganese-based material, lithium nickel cobalt aluminate, or combinations thereof. The second active substance layer includes a negative electrode active substance, and the negative electrode active substance may be at least one selected from graphite materials, alloy materials, and lithium metal and alloys thereof. The graphite materials may be at least one selected from artificial graphite and natural graphite; and the alloy materials may be at least one selected from silicon, silicon oxide, tin, and titanium sulfide.

Referring to FIG. 1, FIG. 3, and FIG. 4, the secondary battery 100 further includes a fixing member 50. The fixing member 50 includes a fixing portion 51 and a connecting portion 52 connected to each other. The fixing portion 51 surrounds the electrode assembly 10 and is configured to fasten the electrode assembly 10, reducing the risk of short circuits due to contact between the adjacent positive electrode plate and negative electrode plate caused by shrinkage of the separator 13. The connecting portion 52 is disposed between the first region 20a1 and the third region 20b1; and viewed along the first direction Z, the connecting portion 52 overlaps with the sealing portion 22. The fixing member 50 is connected to the packaging bag 20 via the connecting portion 52, which improves stability between the electrode assembly 10 and the packaging bag 20 and reduces the risk of sliding of the electrode assembly 10 in the packaging bag 20, improving safety of the secondary battery 100. In this embodiment, the fixing portion 51 and the connecting portion 52 are arranged in the second direction Y, and the connecting portion 52 overlaps with a portion of the sealing portion 22 located on a side of the electrode assembly 10 in the second direction Y.

Referring to FIG. 3, the connecting portion 52 includes a first sealing layer 521, where the first sealing layer 521 includes a first surface 521a and a second surface 521b disposed opposite to each other in the first direction Z, and the connecting portion 52 is connected to the sealing layer 201 in the first region 20a1 via the first surface 521a and connected to the sealing layer 201 in the third region 20b1 via the second surface 521b. The first sealing layer 521 and the sealing layer 201 may be adhered through heating to soften and melt. In other embodiments, the first sealing layer 521 and the sealing layer 201 are adhered through adhesion. The first sealing layer 521 includes at least one of polypropylene, modified polypropylene, polyethylene, ethylene-propylene copolymer, ethylene-vinyl acetate copolymer, or ethylene-ethyl acrylate copolymer.

Referring to FIG. 1 and FIG. 3, the secondary battery 100 further includes a first insulating layer 70 and a second insulating layer 80. The first insulating layer 70 covers a surface of the first metal plate 30, and the first metal plate 30 is connected to the first region 20a1 and third region 20b1 of the packaging bag 20 via the first insulating layer 70. The second insulating layer 80 covers a surface of the second metal plate 40, and the second metal plate 40 is connected to the first region 20a1 and third region 20b1 of the packaging bag 20 via the second insulating layer 80. Viewed along the first direction Z, the first metal plate 30, the second metal plate 40, and the connecting portion 52 are located on a same side of the secondary battery 100. In a third direction X perpendicular to both the first direction Z and the second direction Y, the first insulating layer 70 and the second insulating layer 80 are spaced apart, and the connecting portion 52 is located between the first metal plate 30 and the second metal plate 40 and does not overlap with the first insulating layer 70 and the second insulating layer 80.

The first insulating layer 70 and/or the second insulating layer 80 may include at least one of polyethylene, polypropylene, phenolic resin, melamine resin, unsaturated polyester resin, epoxy resin, silicone resin, or polyurethane. In this embodiment, the first insulating layer 70 and the sealing layer 201 of the packaging bag 20 are adhered to connect the first insulating layer 70 to the first region 20a1 and the third region 20b 1; and the second insulating layer 80 and the sealing layer 201 of the packaging bag 20 are adhered to connect the second insulating layer 80 to the first region 20a1 and the third region 20b1. In other embodiments, the first insulating layer 70 or the second insulating layer 80 may be connected to the packaging bag 20 through adhesion, for example, through an adhesive layer.

Referring to FIG. 1 and FIG. 4, in the second direction Y, the electrode assembly 10 includes a first edge 10a and a second edge 10b located on a side opposite the first edge 10a, the connecting portion 52 includes a fifth edge 52a located on a side of the first edge 10a and a sixth edge 52b located on a side opposite the fifth edge 52a and on a side of the second edge 10b, the sealing portion 22 includes a seventh edge 22a located on a side of the first edge 10a and an eighth edge 22b located on a side opposite the seventh edge 22a and on a side of the second edge 10b, and the first insulating layer 70 includes a ninth edge 70a located on a side of the first edge 10a and a tenth edge 70b located on a side opposite the ninth edge 70a and on a side of the second edge 10b. In the second direction Y, a distance by which the fifth edge 52a extends beyond the seventh edge 22a is L1, and a distance by which the ninth edge 70a extends beyond the seventh edge 22a is L2, satisfying 0 mm ≤ L1 ≤ 0.5 mm and 0.05 mm ≤ L2 ≤ 2 mm. L1 and L2 falling within the foregoing ranges is conducive to improving sealing reliability.

Referring to FIG. 1, in the third direction X, width of the fixing portion 51 is W, and 3 mm ≤ W ≤ 50 mm. The width W of the fixing portion 51 falling within the foregoing range is conducive to improving the fastening effect of the fixing member 50 on the electrode assembly 10.

In some embodiments, in the first direction Z, an area of an orthographic projection of the fixing portion 51 on the electrode assembly 10 is S1 mm², and an area of an orthographic projection of the electrode assembly 10 is S2 mm², and 15% ≤ S1/S2 ≤ 80%, which is conducive to improving the fastening effect of the fixing member 50 on the electrode assembly 10.

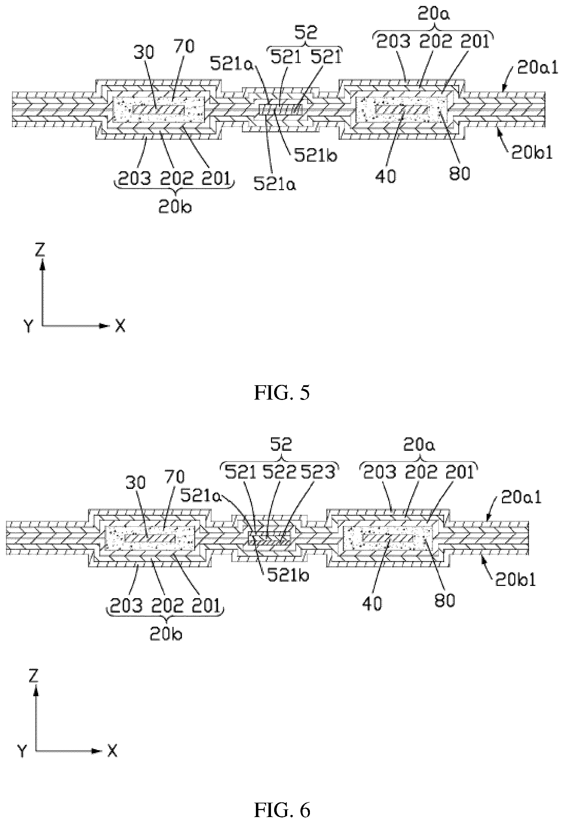

FIG. 5 is a cross-sectional view of a secondary battery according to another embodiment of this application, where the cross-sectional position is the same as that in FIG. 3. Referring to FIG. 5, in the first direction Z, the connecting portion 52 includes two first sealing layers 521 integrally disposed, where the two first sealing layers 521 are in contact with each other via the second surfaces 521b, and the first surfaces 521a are exposed outside the two first sealing layers 521. The connecting portion 52 is connected to the sealing layers 201 in the first region 20a1 and the third region 20b1 via the first surfaces 521a.

FIG. 6 is a cross-sectional view of a secondary battery according to still another embodiment of this application, where the cross-sectional position is the same as that in FIG. 3. Referring to FIG. 6, the connecting portion 52 further includes a metal layer 522 and a second sealing layer 523. In the first direction Z, the first sealing layer 521, the metal layer 522, and the second sealing layer 523 are stacked sequentially. The metal layer 522 is in contact with the second surface 521b of the first sealing layer 521. The connecting portion 52 is connected to the sealing layer 201 in the first region 20a1 via the first surface 521a of the first sealing layer 521 and connected to the sealing layer 201 in the third region 20b1 via a surface of the second sealing layer 523 facing away from the metal layer 522. The second sealing layer 523 includes at least one of polypropylene, modified polypropylene, polyethylene, ethylene-propylene copolymer, ethylene-vinyl acetate copolymer, or ethylene-ethyl acrylate copolymer. The metal layer 522 is used to enhance rigidity of the fixing member 50, and the metal layer 522 may be made of aluminum, steel, or the like.

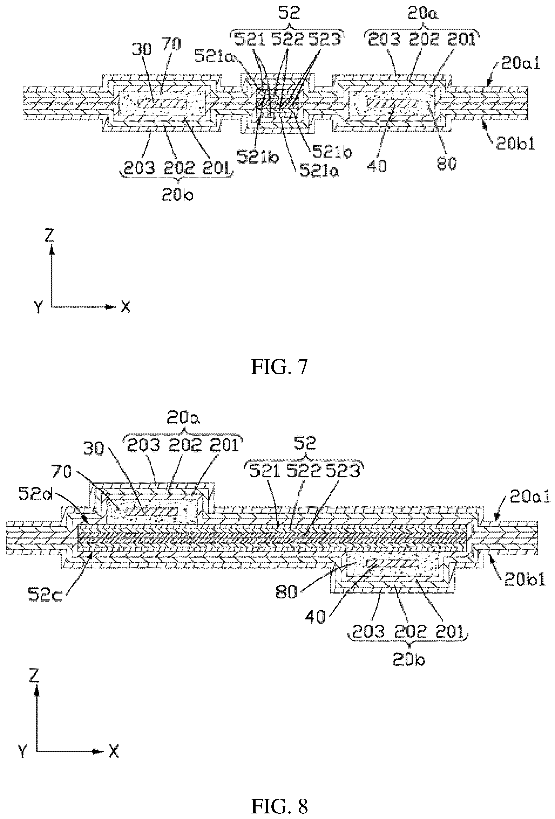

FIG. 7 is a cross-sectional view of a secondary battery according to still another embodiment of this application, where the cross-sectional position is the same as that in FIG. 3. Referring to FIG. 7, in the first direction Z, the connecting portion 52 includes two first sealing layers 521 integrally disposed, two metal layers 522 integrally disposed between the two first sealing layers 521, and two second sealing layers 523 integrally disposed between the two metal layers 522. In the first direction Z, the adjacent first sealing layer 521, metal layer 522, and second sealing layer 523 are stacked sequentially. The metal layer 522 is in contact with the second surface 521b of the first sealing layer 521. Two surfaces of the two second sealing layers 523 facing away from the two metal layers 522 are connected. The connecting portion 52 is connected to the sealing layers 201 in the first region 20a1 and the third region 20b1 via the first surfaces 521a of the first sealing layers 521.

In some embodiments, the fixing portion 51 and the connecting portion 52 are integrally disposed. Specifically, in the first direction Z, the fixing portion 51 also includes two first sealing layers 521, two metal layers 522 located between the two first sealing layers 521, and two second sealing layers 523 located between the two metal layers 522, where the second sealing layer 523 of the fixing portion 51 is in contact with the electrode assembly 10. The fixing member 50 may be an aluminum-plastic film or a steel-plastic film. In other embodiments, the fixing portion 51 and the connecting portion 52 are separately disposed, and the fixing portion 51 and the connecting portion 52 are individually formed and connected to form the fixing member 50. The fixing portion 51 and the connecting portion 52 may be made of the same or different materials.

FIG. 8 is a cross-sectional view of a secondary battery according to still another embodiment of this application, where the cross-sectional position is the same as that in FIG. 7. Referring to FIG. 8, in the third direction X, a distance between the first metal plate 30 and the second metal plate 40 is less than 1.5 mm, which is conducive to reducing width of the secondary battery 100 in the third direction X, meeting the requirements for miniaturization. The first insulating layer 70 and the second insulating layer 80 are spaced apart in the first direction Z. In the first direction Z, the connecting portion 52 is disposed between the first insulating layer 70 and the second insulating layer 80; and viewed along the first direction Z, the connecting portion 52 overlaps with the first insulating layer 70 and the second insulating layer 80. The connecting portion 52 includes a first face 52d facing the first region 20a1 and a second face 52c facing the third region 20b1, where the first face 52d is adhered to the first insulating layer 70, and the second face 52c is adhered to the second insulating layer 80. The first metal plate 30 and the second metal plate 40 are isolated by the first insulating layer 70, the connecting portion 52, and the second insulating layer 80 adhered, reducing the risk of short circuits due to contact between the first metal plate 30 and the second metal plate 40.

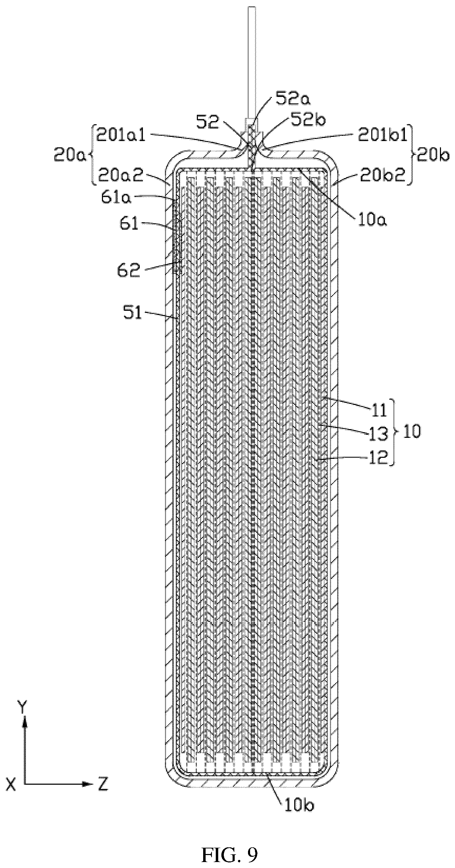

FIG. 9 is a cross-sectional view of a secondary battery according to still another embodiment of this application, where the cross-sectional position is the same as that in FIG. 4. Referring to FIG. 9, in some embodiments, the secondary battery 100 further includes a first adhesive layer 61. The first adhesive layer 61 is disposed on a surface of the fixing portion 51 facing the packaging bag 20 and adhered to the body portion 21, to fix the electrode assembly 10 to the packaging bag 20, which reduces the risk of sliding of the electrode assembly 10 in the packaging bag 20, improving the safety performance. In some embodiments, the secondary battery 100 further includes a second adhesive layer 62. The second adhesive layer 62 is disposed on a surface of the fixing portion 51 facing the electrode assembly 10 and adhered to the electrode assembly 10, enhancing the fixing effect of the fixing member 50 on the electrode assembly 10. The first adhesive layer 61 and/or the second adhesive layer 62 includes at least one of polyethylene, polypropylene, phenolic resin, melamine resin, unsaturated polyester resin, epoxy resin, silicone resin, or polyurethane. The first adhesive layer 61 and/or the second adhesive layer 62 may be a hot-melt adhesive, a double-sided adhesive, or the like.

Referring to FIG. 9, in the second direction Y, the electrode assembly 10 includes a first edge 10a and a second edge 10b located on a side opposite the first edge 10a, the first adhesive layer 61 includes a third edge 61a located on a side of the first edge 10a and a fourth edge 61b located on a side opposite the third edge 61a and on a side of the second edge 10b, and the connecting portion 52 includes a fifth edge 52a located on a side of the first edge 10a and a sixth edge 52b located on a side opposite the fifth edge 52a and on a side of the second edge 10b. In the second direction Y, a distance between the first edge 10a and the fifth edge 52a is less than a distance between the third edge 61a and the fifth edge 52a, and a distance by which the first edge 10a extends beyond the third edge 61a is greater than or equal to 2 mm, for example, 2 mm, 3 mm, 4 mm, or 5 mm. The distance by which the first edge 10a extends beyond the third edge 61a falling within the foregoing range can reduce the risk of the first adhesive layer 61 overflowing to the sealing portion 22 under the conditions of formation heating and pressurization, improving the sealing reliability.

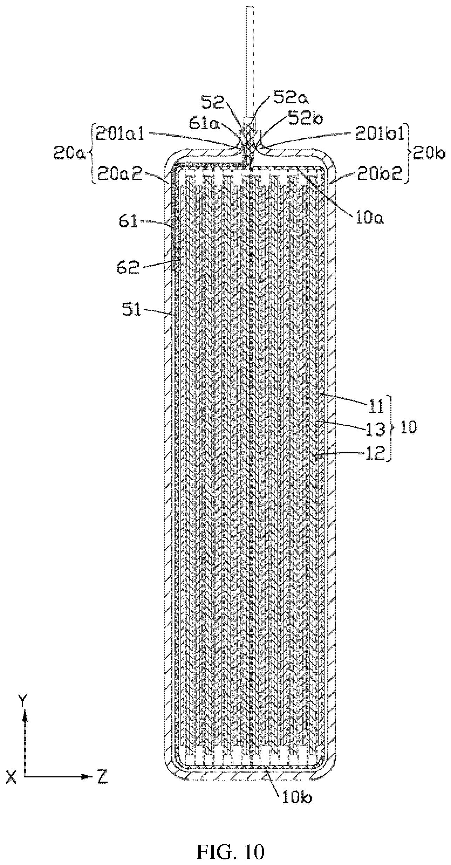

FIG. 10 is a cross-sectional view of a secondary battery according to still another embodiment of this application, where the cross-sectional position is the same as that in FIG. 4. Referring to FIG. 10, in the second direction Y, the first adhesive layer 61 extends to the connecting portion 52. Viewed along the first direction Z, in the second direction Y, the first adhesive layer 61 does not overlap with the sealing portion 22, which reduces the risk of the first adhesive layer 61 being sealed into the sealing portion 22, improving the sealing reliability. In some embodiments, in the second direction Y, the distance between the third edge 61a and the fifth edge 52a is 2 mm to 10 mm, for example, 2 mm, 3 mm, 4 mm, 5 mm, 6 mm, 7 mm, 8 mm, 9 mm, or 10 mm.

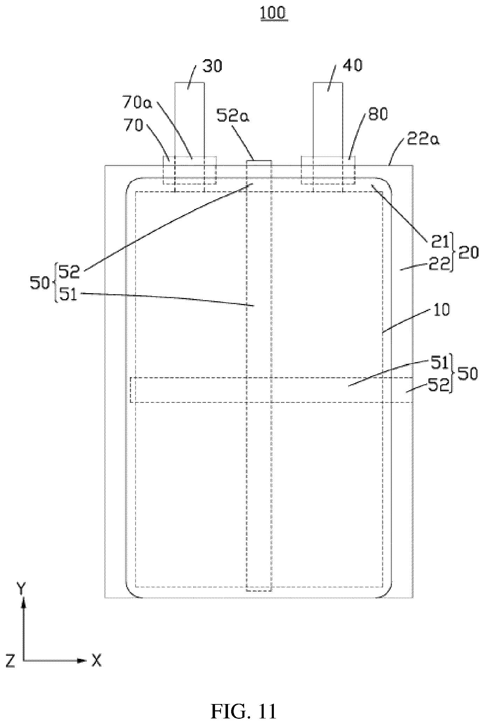

In some embodiments, the fixing member 50 is provided in plurality. Viewed along the first direction Z, the plurality of fixing members 50 intersect in different directions. Viewed along the first direction Z, the plurality of fixing members 50 may intersect in a cross shape, a "×" shape, a "#" shape, a "*" shape, or the like. FIG. 11 shows the situation where two fixing members 50 intersect in a cross shape. The fixing portion 51 of one fixing member 50 surrounds two opposite surfaces of the electrode assembly 10 in the first direction Z and two opposite surfaces of the electrode assembly 10 in the second direction Y, and the connecting portion 52 of the fixing member 50 extends along the second direction Y from an edge of the fixing portion 51 of the fixing member 50 in the second direction Y. The fixing portion 51 of the other fixing member 50 surrounds two opposite surfaces of the electrode assembly 10 in the first direction Z and two opposite surfaces of the electrode assembly 10 in the third direction X, and the connecting portion 52 of the fixing member 50 extends along the third direction X from an edge of the fixing portion 51 of the fixing member 50 in the third direction X. The plurality of fixing members 50 being disposed in different directions can reduce the risk of short circuits due to contact between the adjacent positive electrode plate and negative electrode plate caused by shrinkage of the separator near any edge of the electrode assembly 10 in the second direction Y and the third direction X. In other embodiments, the plurality of fixing members 50 may be disposed in parallel in a same direction.

An embodiment of this application further provides an electronic apparatus including any one of the foregoing secondary batteries. The electronic apparatus of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a lighting appliance, a toy, a game console, a clock, an electric tool, a flash lamp, a camera, a large household battery, or a lithium-ion capacitor.

The descriptions disclosed above are only the preferred embodiments of this application, and do not, certainly, constitute any limitation on the scope of the claims of this application. Accordingly, any equivalent changes made in accordance with the claims of this application still fall within the scope of this application.

## Claims

1. A secondary battery (100), comprising:
an electrode assembly (10);
a packaging bag (20) comprising a first packaging portion (20a) and a second packaging portion (20b) disposed opposite to each other in a first direction (Z), wherein the first packaging portion (20a) comprises a first region (20a1) and a second region (20a2) connected to each other where three side edges of the second region (20a2) are surrounded by the first region (20a1) , and the second packaging portion (20b) comprises a third region (20b1) and a fourth region (20b2) connected to each other where three side edges of the fourth region (20b2) are surrounded by the third region (20b1), the second region (20a2) and the fourth region (20b2) are arranged in the first direction (Z) forming a body portion (21) for accommodating the electrode assembly (10), and the first region (20a1) and the third region (20b1) are arranged in the first direction (Z) forming a sealing portion (22) for sealing the body portion (21);
**characterized in that** the secondary battery (100) comprises:
a fixing member (50) comprising a fixing portion (51) and a connecting portion (52) connected to each other and arranged in the second direction (Y), wherein the fixing portion (51) surrounds the electrode assembly (10) and is configured to fasten the electrode assembly (10); and the connecting portion (52) is disposed between the first region (20a1) and the third region (20b1); and viewed along the first direction, the connecting portion (52) overlaps with the sealing portion (22) on a side of the electrode assembly (10) in the second direction (Y),
wherein the fixing member (50) is connected to the packaging bag (20) via the connecting portion (52).

2. The secondary battery (100) according to claim 1, wherein the connecting portion (52) comprises a first sealing layer (521), wherein the first sealing layer (521) comprises a first surface (521a) and a second surface (521b) disposed opposite to each other in the first direction.

3. The secondary battery (100) according to claim 2, **characterized in that** the connecting portion (52) satisfies at least one of the following conditions:
(1) the connecting portion (52) is connected to the first region (20a1) via the first surface (521a) and connected to the third region (20b1) via the second surface (521b);
(2) the connecting portion (52) is connected to the first region (20a1) and the third region (20b1) via the first surface (521a);
(3) the connecting portion (52) further comprises a metal layer (522) and a second sealing layer (523); wherein in the first direction, the first sealing layer (521), the metal layer (522), and the second sealing layer (523) are stacked sequentially; the connecting portion (52) is connected to the first region (20a1) via the first sealing layer (521) and the connecting portion (52) is connected to the third region (20b1) via the second sealing layer (523); or
(4) the connecting portion (52) further comprises a metal layer (522) and a second sealing layer (523); wherein in the first direction, the first sealing layer (521), the metal layer (522), and the second sealing layer (523) are stacked sequentially, and the connecting portion (52) is connected to the first region (20a1) and the third region (20b1) via the first sealing layer (521).

4. The secondary battery (100) according to claim 1, wherein the connecting portion (52) and the fixing portion (51) are integrally formed or separately formed.

5. The secondary battery (100) according to any one of claims 2 to 3, wherein the first sealing layer (521) and/or the second sealing layer (523) comprises at least one of polypropylene, modified polypropylene, polyethylene, ethylene-propylene copolymer, ethylene-vinyl acetate copolymer, or ethylene-ethyl acrylate copolymer.

6. The secondary battery (100) according to claim 1, wherein the secondary battery (100) further comprises a first adhesive layer (61), wherein the first adhesive layer (61) is disposed on a surface of the fixing portion (51) facing the packaging bag (20) and is adhered to the body portion (21).

7. The secondary battery (100) according to claim 6, **characterized in that** the secondary battery (100) satisfies at least one of the following conditions:
(1) in a second direction perpendicular to the first direction, the electrode assembly (10) comprises a first edge (10a) and a second edge (10b) located on a side opposite to the first edge (10a), and the first adhesive layer (61) comprises a third edge (61a) located on a side of the first edge (10a) and a fourth edge (61b) located on a side opposite to the third edge (61a) and on a side of the second edge (10b), wherein a distance by which the first edge (10a) extends beyond the third edge (61a) is greater than or equal to 2 mm;
(2) the first adhesive layer (61) comprises at least one of polyethylene, polypropylene, phenolic resin, melamine resin, unsaturated polyester resin, epoxy resin, silicone resin, or polyurethane; or
(3) in a second direction perpendicular to the first direction, the first adhesive layer (61) extends to the connecting portion (52); and viewed along the first direction, the first adhesive layer (61) does not overlap with the sealing portion (22) in the second direction.

8. The secondary battery (100) according to claim 7, wherein in the second direction, the first adhesive layer (61) comprises a third edge (61a) and a fourth edge (61b) located on a side opposite to the third edge (61a), and the connecting portion (52) comprises a fifth edge (52a) located on a side of the third edge (61a) and a sixth edge (52b) located on a side opposite to the fifth edge (52a) and on a side of the fourth edge (61b), wherein a distance between the third edge (61a) and the fifth edge (52a) is 2 mm to 10 mm.

9. The secondary battery (100) according to claim 1, wherein the secondary battery (100) further comprises a second adhesive layer (62), wherein the second adhesive layer (62) is disposed on a surface of the fixing portion (51) facing the electrode assembly (10) and is adhered to the electrode assembly (10).

10. The secondary battery (100) according to claim 1, wherein the secondary battery (100) further comprises:
a first metal plate (30) electrically connected to the electrode assembly (10) and extending out of the packaging bag (20) in a second direction perpendicular to the first direction through the sealing portion (22);
a second metal plate (40) electrically connected to the electrode assembly (10) and extending out of the packaging bag (20) in the second direction through the sealing portion (22);
a first insulating layer (70) covering a surface of the first metal plate (30); and
a second insulating layer (80) covering a surface of the second metal plate (40).

11. The secondary battery (100) according to claim 10, wherein viewed along the first direction, the first metal plate (30), the second metal plate (40), and the connecting portion (52) are located on a same side of the secondary battery (100).

12. The secondary battery (100) according to claim 11, **characterized in that** the secondary battery (100) satisfies at least one of the following conditions:
(1) in a third direction, a distance between the first metal plate (30) and the second metal plate (40) is less than 1.5 mm; and viewed along the first direction, the connecting portion (52) overlaps with the first insulating layer (70) and the second insulating layer (80), and the connecting portion (52) comprises a first face (52d) facing the first region (20a1) and a second face (52c) facing the third region (20b1), wherein the first face (52d) is adhered to the first insulating layer (70), and the second face (52c) is adhered to the second insulating layer (80), the first direction, the second direction, and the third direction being perpendicular to each other;
(2) viewed along the first direction, the connecting portion (52) is located between the first metal plate (30) and the second metal plate (40) in a third direction, and the connecting portion (52) does not overlap with the first insulating layer (70) and the second insulating layer (80); the first direction, the second direction, and the third direction being perpendicular to each other;
(3) in **the** second direction, the connecting portion (52) comprises a fifth edge (52a) and a sixth edge (52b) located on a side opposite to the fifth edge (52a), and the sealing portion (22) comprises a seventh edge (22a) located on a side of the fifth edge (52a) and an eighth edge (22b) located on a side opposite to the seventh edge (22a) and on a side of the sixth edge (52b), wherein a distance by which the fifth edge (52a) extends beyond the seventh edge (22a) is L1, and 0 mm ≤ L1 ≤ 0.5 mm; or
(4) in the second direction, the sealing portion (22) comprises a seventh edge (22a) and an eighth edge (22b) located on a side opposite to the seventh edge (22a), and the first insulating layer (70) comprises a ninth edge (70a) located on a side of the seventh edge (22a) and a tenth edge (70b) located on a side opposite to the ninth edge (70a) and on a side of the eighth edge (22b), wherein a distance by which the ninth edge (70a) extends beyond the seventh edge (22a) is L2, and 0.05 mm ≤ L2 ≤ 2 mm.

13. The secondary battery (100) according to claim 1, wherein in a third direction perpendicular to the first direction, a width of the fixing portion (51) is 3 mm to 50 mm.

14. The secondary battery (100) according to claim 1, wherein in the first direction, an area of an orthographic projection of the fixing portion (51) on the electrode assembly (10) is S1, and an area of the electrode assembly (10) as viewed along the first direction is S2, and 15% ≤ S1/S2 ≤ 80%.

15. The secondary battery (100) according to claim 1, wherein the fixing member (50) is provided in plurality, and viewed along the first direction, the plurality of fixing members (50) intersect.

16. An electronic apparatus, comprising the secondary battery (100) according to any one of claims 1 to 15.

## Patentansprüche

1. Sekundärbatterie (100), umfassend:
eine Elektrodenanordnung (10);
einen Verpackungsbeutel (20), der einen ersten Verpackungsabschnitt (20a) und einen zweiten Verpackungsabschnitt (20b) umfasst, die einander in einer ersten Richtung (Z) gegenüberliegend angeordnet sind, wobei der erste Verpackungsabschnitt (20a) einen ersten Bereich (20a1) und einen zweiten Bereich (20a2) umfasst, die miteinander verbunden sind, wobei drei Seitenkanten des zweiten Bereichs (20a2) von dem ersten Bereich (20a1) umgeben sind, und der zweite Verpackungsabschnitt (20b) einen dritten Bereich (20b1) und einen vierten Bereich (20b2) umfasst, die miteinander verbunden sind, wobei drei Seitenkanten des vierten Bereichs (20b2) von dem dritten Bereich (20b1) umgeben sind, wobei der zweite Bereich (20a2) und der vierte Bereich (20b2) in der ersten Richtung (Z) angeordnet sind und einen Körperabschnitt (21) zur Aufnahme der Elektrodenanordnung (10) bilden, und der erste Bereich (20a1) und der dritte Bereich (20b1) in der ersten Richtung (Z) angeordnet sind und einen Dichtungsabschnitt (22) zum Abdichten des Körperabschnitts (21) bilden;
**dadurch gekennzeichnet, dass** die Sekundärbatterie (100) umfasst:
ein Befestigungselement (50), das einen Befestigungsabschnitt (51) und einen Verbindungsabschnitt (52) umfasst, die miteinander verbunden und in der zweiten Richtung (Y) angeordnet sind, wobei der Befestigungsabschnitt (51) die Elektrodenanordnung (10) umschließt und dazu ausgebildet ist, die Elektrodenanordnung (10) zu befestigen; und der Verbindungsabschnitt (52) zwischen dem ersten Bereich (20a1) und dem dritten Bereich (20b1) angeordnet ist; und, in der ersten Richtung betrachtet, der Verbindungsabschnitt (52) mit dem Dichtungsabschnitt (22) an einer Seite der Elektrodenanordnung (10) in der zweiten Richtung (Y) überlappt,
wobei das Befestigungselement (50) via den Verbindungsabschnitt (52) mit dem Verpackungsbeutel (20) verbunden ist.

2. Sekundärbatterie (100) nach Anspruch 1, wobei der Verbindungsabschnitt (52) eine erste Dichtungsschicht (521) umfasst, wobei die erste Dichtungsschicht (521) eine erste Oberfläche (521a) und eine zweite Oberfläche (521b) umfasst, die einander in der ersten Richtung gegenüberliegend angeordnet sind.

3. Sekundärbatterie (100) nach Anspruch 2, **dadurch gekennzeichnet, dass** der Verbindungsabschnitt (52) mindestens eine der folgenden Bedingungen erfüllt:
(1) der Verbindungsabschnitt (52) ist via die erste Oberfläche (521a) mit dem ersten Bereich (20a1) und via die zweite Oberfläche (521b) mit dem dritten Bereich (20b1) verbunden;
(2) der Verbindungsabschnitt (52) ist via die erste Oberfläche (521a) mit dem ersten Bereich (20a1) und dem dritten Bereich (20b1) verbunden;
(3) der Verbindungsabschnitt (52) umfasst ferner eine Metallschicht (522) und eine zweite Dichtungsschicht (523); wobei in der ersten Richtung die erste Dichtungsschicht (521), die Metallschicht (522) und die zweite Dichtungsschicht (523) nacheinander gestapelt sind; der Verbindungsabschnitt (52) via die erste Dichtungsschicht (521) mit dem ersten Bereich (20a1) verbunden ist und der Verbindungsabschnitt (52) via die zweite Dichtungsschicht (523) mit dem dritten Bereich (20b1) verbunden ist; oder
(4) der Verbindungsabschnitt (52) umfasst ferner eine Metallschicht (522) und eine zweite Dichtungsschicht (523); wobei in der ersten Richtung die erste Dichtungsschicht (521), die Metallschicht (522) und die zweite Dichtungsschicht (523) nacheinander gestapelt sind, und der Verbindungsabschnitt (52) via die erste Dichtungsschicht (521) mit dem ersten Bereich (20a1) und dem dritten Bereich (20b1) verbunden ist.

4. Sekundärbatterie (100) nach Anspruch 1, wobei der Verbindungsabschnitt (52) und der Befestigungsabschnitt (51) einstückig ausgebildet oder getrennt ausgebildet sind.

5. Sekundärbatterie (100) nach einem der Ansprüche 2 bis 3, wobei die erste Dichtungsschicht (521) und/oder die zweite Dichtungsschicht (523) mindestens eines von Polypropylen, modifiziertem Polypropylen, Polyethylen, Ethylen-Propylen-Copolymer, Ethylen-Vinylacetat-Copolymer oder Ethylen-Ethylacrylat-Copolymer umfasst.

6. Sekundärbatterie (100) nach Anspruch 1, wobei die Sekundärbatterie (100) ferner eine erste Klebeschicht (61) umfasst, wobei die erste Klebeschicht (61) an einer dem Verpackungsbeutel (20) zugewandten Oberfläche des Befestigungsabschnitts (51) angeordnet und mit dem Körperabschnitt (21) verklebt ist.

7. Sekundärbatterie (100) nach Anspruch 6, **dadurch gekennzeichnet, dass** die Sekundärbatterie (100) mindestens eine der folgenden Bedingungen erfüllt:
(1) in einer zweiten Richtung senkrecht zur ersten Richtung umfasst die Elektrodenanordnung (10) eine erste Kante (10a) und eine zweite Kante (10b), die an einer der ersten Kante (10a) gegenüberliegenden Seite angeordnet ist, und die erste Klebeschicht (61) umfasst eine dritte Kante (61a), die an einer Seite der ersten Kante (10a) angeordnet ist, und eine vierte Kante (61b), die an einer der dritten Kante (61a) gegenüberliegenden Seite und an einer Seite der zweiten Kante (10b) angeordnet ist, wobei ein Abstand, um den sich die erste Kante (10a) über die dritte Kante (61a) hinaus erstreckt, größer als oder gleich 2 mm ist;
(2) die erste Klebeschicht (61) umfasst mindestens eines von Polyethylen, Polypropylen, Phenolharz, Melaminharz, ungesättigtem Polyesterharz, Epoxidharz, Silikonharz oder Polyurethan; oder
(3) in einer zweiten Richtung senkrecht zur ersten Richtung erstreckt sich die erste Klebeschicht (61) bis zu dem Verbindungsabschnitt (52); und, in der ersten Richtung betrachtet, überlappt die erste Klebeschicht (61) in der zweiten Richtung nicht mit dem Dichtungsabschnitt (22).

8. Sekundärbatterie (100) nach Anspruch 7, wobei in der zweiten Richtung die erste Klebeschicht (61) eine dritte Kante (61a) und eine vierte Kante (61b) umfasst, die an einer der dritten Kante (61a) gegenüberliegenden Seite angeordnet ist, und der Verbindungsabschnitt (52) eine fünfte Kante (52a), die an einer Seite der dritten Kante (61a) angeordnet ist, und eine sechste Kante (52b) umfasst, die an einer der fünften Kante (52a) gegenüberliegenden Seite und an einer Seite der vierten Kante (61b) angeordnet ist, wobei ein Abstand zwischen der dritten Kante (61a) und der fünften Kante (52a) 2 mm bis 10 mm beträgt.

9. Sekundärbatterie (100) nach Anspruch 1, wobei die Sekundärbatterie (100) ferner eine zweite Klebeschicht (62) umfasst, wobei die zweite Klebeschicht (62) an einer der Elektrodenanordnung (10) zugewandten Oberfläche des Befestigungsabschnitts (51) angeordnet und mit der Elektrodenanordnung (10) verklebt ist.

10. Sekundärbatterie (100) nach Anspruch 1, wobei die Sekundärbatterie (100) ferner Folgendes umfasst:
eine erste Metallplatte (30), die elektrisch mit der Elektrodenanordnung (10) verbunden ist und in einer zweiten Richtung senkrecht zur ersten Richtung durch den Dichtungsabschnitt (22) aus dem Verpackungsbeutel (20) herausragt;
eine zweite Metallplatte (40), die elektrisch mit der Elektrodenanordnung (10) verbunden ist und in der zweiten Richtung durch den Dichtungsabschnitt (22) aus dem Verpackungsbeutel (20) herausragt;
eine erste Isolierschicht (70), die eine Oberfläche der ersten Metallplatte (30) bedeckt; und
eine zweite Isolierschicht (80), die eine Oberfläche der zweiten Metallplatte (40) bedeckt.

11. Sekundärbatterie (100) nach Anspruch 10, wobei, in der ersten Richtung betrachtet, die erste Metallplatte (30), die zweite Metallplatte (40) und der Verbindungsabschnitt (52) auf derselben Seite der Sekundärbatterie (100) angeordnet sind.

12. Sekundärbatterie (100) nach Anspruch 11, **dadurch gekennzeichnet, dass** die Sekundärbatterie (100) mindestens eine der folgenden Bedingungen erfüllt:
(1) in einer dritten Richtung beträgt ein Abstand zwischen der ersten Metallplatte (30) und der zweiten Metallplatte (40) weniger als 1,5 mm; und, in der ersten Richtung betrachtet, überlappt der Verbindungsabschnitt (52) mit der ersten Isolierschicht (70) und der zweiten Isolierschicht (80), und der Verbindungsabschnitt (52) umfasst eine erste Fläche (52d), die dem ersten Bereich (20a1) zugewandt ist, und eine zweite Fläche (52c), die dem dritten Bereich (20b1) zugewandt ist, wobei die erste Fläche (52d) mit der ersten Isolierschicht (70) verklebt ist und die zweite Fläche (52c) mit der zweiten Isolierschicht (80) verklebt ist, wobei die erste Richtung, die zweite Richtung und die dritte Richtung senkrecht zueinander stehen;
(2) in der ersten Richtung betrachtet, ist der Verbindungsabschnitt (52) in einer dritten Richtung zwischen der ersten Metallplatte (30) und der zweiten Metallplatte (40) angeordnet, und der Verbindungsabschnitt (52) überlappt nicht mit der ersten Isolierschicht (70) und der zweiten Isolierschicht (80); wobei die erste Richtung, die zweite Richtung und die dritte Richtung senkrecht zueinander stehen;
(3) in der zweiten Richtung umfasst der Verbindungsabschnitt (52) eine fünfte Kante (52a) und eine sechste Kante (52b), die an einer der fünften Kante (52a) gegenüberliegenden Seite angeordnet ist, und der Dichtungsabschnitt (22) umfasst eine siebte Kante (22a), die an einer Seite der fünften Kante (52a) angeordnet ist, und eine achte Kante (22b), die an einer der siebten Kante (22a) gegenüberliegenden Seite und an einer Seite der sechsten Kante (52b) angeordnet ist, wobei ein Abstand, um den sich die fünfte Kante (52a) über die siebte Kante (22a) hinaus erstreckt, L1 beträgt und 0 mm ≤ L1 ≤ 0,5 mm gilt; oder
(4) in der zweiten Richtung umfasst der Dichtungsabschnitt (22) eine siebte Kante (22a) und eine achte Kante (22b), die an einer der siebten Kante (22a) gegenüberliegenden Seite angeordnet ist, und die erste Isolierschicht (70) umfasst eine neunte Kante (70a), die an einer Seite der siebten Kante (22a) angeordnet ist, und eine zehnte Kante (70b), die an einer der neunten Kante (70a) gegenüberliegenden Seite und an einer Seite der achten Kante (22b) angeordnet ist, wobei ein Abstand, um den sich die neunte Kante (70a) über die siebte Kante (22a) hinaus erstreckt, L2 beträgt und 0,05 mm ≤ L2 ≤ 2 mm gilt.

13. Sekundärbatterie (100) nach Anspruch 1, wobei in einer dritten Richtung senkrecht zur ersten Richtung eine Breite des Befestigungsabschnitts (51) 3 mm bis 50 mm beträgt.

14. Sekundärbatterie (100) nach Anspruch 1, wobei in der ersten Richtung eine Fläche einer orthografischen Projektion des Befestigungsabschnitts (51) auf die Elektrodenanordnung (10) S1 ist und eine Fläche der Elektrodenanordnung (10) bei Betrachtung entlang der ersten Richtung S2 ist, und 15 % ≤ S1/S2 ≤ 80 % gilt.

15. Sekundärbatterie (100) nach Anspruch 1, wobei das Befestigungselement (50) in einer Mehrzahl vorgesehen ist und, in der ersten Richtung betrachtet, die Mehrzahl der Befestigungselemente (50) einander schneiden.

16. Elektronisches Gerät, umfassend die Sekundärbatterie (100) nach einem der Ansprüche 1 bis 15.

## Revendications

1. Une batterie secondaire (100), comprenant :
un ensemble d'électrodes (10) ;
un sac d'emballage (20) comprenant une première partie d'emballage (20a) et une seconde partie d'emballage (20b) disposées l'une en face de l'autre selon une première direction (Z), dans laquelle la première partie d'emballage (20a) comprend une première région (20a1) et une seconde région (20a2) connectées l'une à l'autre, où trois bords latéraux de la seconde région (20a2) sont entourés par la première région (20a1), et la seconde partie d'emballage (20b) comprend une troisième région (20b1) et une quatrième région (20b2) connectées l'une à l'autre, où trois bords latéraux de la quatrième région (20b2) sont entourés par la troisième région (20b1), la seconde région (20a2) et la quatrième région (20b2) étant disposées selon la première direction (Z) pour former une partie corps (21) destinée à recevoir l'ensemble d'électrodes (10), et la première région (20a1) et la troisième région (20b1) étant disposées selon la première direction (Z) pour former une partie scellée (22) destinée à sceller la partie corps (21) ;
**caractérisé en ce que** la batterie secondaire comprend :
un élément de fixation (50) comprenant une partie de fixation (51) et une partie de connexion (52) connectées l'une à l'autre et disposées selon une seconde direction (Y), dans laquelle la partie de fixation (51) entoure l'ensemble d'électrodes (10) et est configurée pour fixer solidement l'ensemble d'électrodes (10) ; et la partie de connexion (52) est disposée entre la première région (20a1) et la troisième région (20b1) ; et vu selon la première direction, la partie de connexion (52) chevauche la partie scellée (22) du côté de l'ensemble d'électrodes (10) selon la seconde direction (Y), dans laquelle l'élément de fixation (50) est connecté au sac d'emballage (20) via la partie de connexion (52).

2. La batterie secondaire (100) selon la revendication 1, dans laquelle la partie de connexion (52) comprend une première couche d'étanchéité (521), dans laquelle la première couche d'étanchéité (521) comprend une première surface (521a) et une seconde surface (521b) disposées l'une en face de l'autre selon la première direction.

3. La batterie secondaire (100) selon la revendication 2, **caractérisée en ce que** la partie de connexion (52) satisfait au moins l'une des conditions suivantes :
(1) la partie de connexion (52) est connectée à la première région (20a1) via la première surface (521a) et connectée à la troisième région (20b1) via la seconde surface (521b) ;
(2) la partie de connexion (52) est connectée à la première région (20a1) et à la troisième région (20b1) via la première surface (521a) ;
(3) la partie de connexion (52) comprend en outre une couche métallique (522) et une seconde couche d'étanchéité (523) ; dans laquelle, selon la première direction, la première couche d'étanchéité (521), la couche métallique (522) et la seconde couche d'étanchéité (523) sont empilées séquentiellement ; la partie de connexion (52) est connectée à la première région (20a1) via la première couche d'étanchéité (521) et la partie de connexion (52) est connectée à la troisième région (20b1) via la seconde couche d'étanchéité (523) ; ou
(4) la partie de connexion (52) comprend en outre une couche métallique (522) et une seconde couche d'étanchéité (523) ; dans laquelle, selon la première direction, la première couche d'étanchéité (521), la couche métallique (522) et la seconde couche d'étanchéité (523) sont empilées séquentiellement, et la partie de connexion (52) est connectée à la première région (20a1) et à la troisième région (20b1) via la première couche d'étanchéité (521).

4. La batterie secondaire (100) selon la revendication 1, dans laquelle la partie de connexion (52) et la partie de fixation (51) sont formées d'un seul tenant ou formées séparément.

5. La batterie secondaire (100) selon l'une quelconque des revendications 2 à 3, dans laquelle la première couche d'étanchéité (521) et/ou la seconde couche d'étanchéité (523) comprennent au moins l'un parmi le polypropylène, le polypropylène modifié, le polyéthylène, le copolymère éthylène-propylène, le copolymère éthylène-acétate de vinyle, ou le copolymère éthylène-acrylate d'éthyle.

6. La batterie secondaire (100) selon la revendication 1, dans laquelle la batterie secondaire (100) comprend en outre une première couche adhésive (61), dans laquelle la première couche adhésive (61) est disposée sur une surface de la partie de fixation (51) faisant face au sac d'emballage (20) et est adhérée à la partie corps (21).

7. La batterie secondaire (100) selon la revendication 6, **caractérisée en ce que** la batterie secondaire (100) satisfait au moins l'une des conditions suivantes :
(1) dans une seconde direction perpendiculaire à la première direction, l'ensemble d'électrodes (10) comprend un premier bord (10a) et un second bord (10b) situés du côté opposé au premier bord (10a), et la première couche adhésive (61) comprend un troisième bord (61a) situé du côté du premier bord (10a) et un quatrième bord (61b) situé du côté opposé au troisième bord (61a) et du côté du second bord (10b), dans laquelle une distance dont le premier bord (10a) dépasse le troisième bord (61a) est supérieure ou égale à 2 mm ;
(2) la première couche adhésive (61) comprend au moins l'un parmi le polyéthylène, le polypropylène, la résine phénolique, la mélamine-formaldéhyde, la résine polyester insaturée, la résine époxy, la résine silicone, ou le polyuréthane ; ou
(3) dans une seconde direction perpendiculaire à la première direction, la première couche adhésive (61) s'étend jusqu'à la partie de connexion (52) ; et vu selon la première direction, la première couche adhésive (61) ne chevauche pas la partie scellée (22) selon la seconde direction.

8. La batterie secondaire (100) selon la revendication 7, dans laquelle, selon la seconde direction, la première couche adhésive (61) comprend un troisième bord (61a) et un quatrième bord (61b) situés du côté opposé au troisième bord (61a), et la partie de connexion (52) comprend un cinquième bord (52a) situé du côté du troisième bord (61a) et un sixième bord (52b) situé du côté opposé au cinquième bord (52a) et du côté du quatrième bord (61b), dans laquelle une distance entre le troisième bord (61a) et le cinquième bord (52a) est comprise entre 2 mm et 10 mm.

9. La batterie secondaire (100) selon la revendication 1, dans laquelle la batterie secondaire (100) comprend en outre une seconde couche adhésive (62), dans laquelle la seconde couche adhésive (62) est disposée sur une surface de la partie de fixation (51) faisant face à l'ensemble d'électrodes (10) et est adhérée à l'ensemble d'électrodes (10).

10. La batterie secondaire (100) selon la revendication 1, dans laquelle la batterie secondaire (100) comprend en outre :
une première plaque métallique (30) connectée électriquement à l'ensemble d'électrodes (10) et s'étendant hors du sac d'emballage (20) selon une seconde direction perpendiculaire à la première direction à travers la partie scellée (22) ;
une seconde plaque métallique (40) connectée électriquement à l'ensemble d'électrodes (10) et s'étendant hors du sac d'emballage (20) selon la seconde direction à travers la partie scellée (22) ;
une première couche d'isolation (70) recouvrant une surface de la première plaque métallique (30) ; et
une seconde couche d'isolation (80) recouvrant une surface de la seconde plaque métallique (40).

11. La batterie secondaire (100) selon la revendication 10, dans laquelle, vu selon la première direction, la première plaque métallique (30), la seconde plaque métallique (40) et la partie de connexion (52) sont situées du même côté de la batterie secondaire (100).

12. La batterie secondaire (100) selon la revendication 11, **caractérisée en ce que** la batterie secondaire (100) satisfait au moins l'une des conditions suivantes :
(1) dans une troisième direction, une distance entre la première plaque métallique (30) et la seconde plaque métallique (40) est inférieure à 1,5 mm ; et vu selon la première direction, la partie de connexion (52) chevauche la première couche d'isolation (70) et la seconde couche d'isolation (80), et la partie de connexion (52) comprend une première face (52d) faisant face à la première région (20a1) et une seconde face (52c) faisant face à la troisième région (20b1), dans laquelle la première face (52d) est adhérée à la première couche d'isolation (70), et la seconde face (52c) est adhérée à la seconde couche d'isolation (80), la première direction, la seconde direction et la troisième direction étant perpendiculaires les unes aux autres ;
(2) vu selon la première direction, la partie de connexion (52) est située entre la première plaque métallique (30) et la seconde plaque métallique (40) selon une troisième direction, et la partie de connexion (52) ne chevauche pas la première couche d'isolation (70) ni la seconde couche d'isolation (80) ; la première direction, la seconde direction et la troisième direction étant perpendiculaires les unes aux autres ;
(3) selon la seconde direction, la partie de connexion (52) comprend un cinquième bord (52a) et un sixième bord (52b) situés du côté opposé au cinquième bord (52a), et la partie scellée (22) comprend un septième bord (22a) situé du côté du cinquième bord (52a) et un huitième bord (22b) situé du côté opposé au septième bord (22a) et du côté du sixième bord (52b), dans laquelle une distance dont le cinquième bord (52a) dépasse le septième bord (22a) est L1, et 0 mm ≤ L1 ≤ 0,5 mm ; ou
(4) selon la seconde direction, la partie scellée (22) comprend un septième bord (22a) et un huitième bord (22b) situés du côté opposé au septième bord (22a), et la première couche d'isolation (70) comprend un neuvième bord (70a) situé du côté du septième bord (22a) et un dixième bord (70b) situé du côté opposé au neuvième bord (70a) et du côté du huitième bord (22b), dans laquelle une distance dont le neuvième bord (70a) dépasse le septième bord (22a) est L2, et 0,05 mm ≤ L2 ≤ 2 mm.

13. La batterie secondaire (100) selon la revendication 1, dans laquelle, dans une troisième direction perpendiculaire à la première direction, une largeur de la partie de fixation (51) est comprise entre 3 mm et 50 mm.

14. La batterie secondaire (100) selon la revendication 1, dans laquelle, selon la première direction, une superficie de la projection orthogonale de la partie de fixation (51) sur l'ensemble d'électrodes (10) est S1, et une superficie de l'ensemble d'électrodes (10) vue selon la première direction est S2, et 15 % ≤ S1/S2 ≤ 80 %.

15. La batterie secondaire (100) selon la revendication 1, dans laquelle l'élément de fixation (50) est prévu en pluralité, et vu selon la première direction, la pluralité d'éléments de fixation (50) se croisent.

16. Un appareil électronique, comprenant la batterie secondaire (100) selon l'une quelconque des revendications 1 à 15.
